Europäisches Patentamt

European Patent Office

Office européen des brevets

(19)

(11)    EP 0 843 444 B1

(12)    EUROPÄISCHE PATENTSCHRIFT

(45) Veröffentlichungstag und Bekanntmachung des
Hinweises auf die Patenterteilung:
**20.09.2006   Patentblatt 2006/38**

(51) Int Cl.:
***H04L 25/03*** *(2006.01)*

(21) Anmeldenummer: **97203476.3**

(22) Anmeldetag: **10.11.1997**

(54) **Digitales Übertragungssystem mit trellisbasiertem, zustandsreduziertem Schätzverfahren**

Digital communication system using a trellis based, reduced state estimation method

Système de communication numérique, utilisant un procédé d'estimation à base de treillis à nombre d'états reduit

(84) Benannte Vertragsstaaten:
**DE FR GB**

(30) Priorität: **18.11.1996   DE 19647653**

(43) Veröffentlichungstag der Anmeldung:
**20.05.1998   Patentblatt 1998/21**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA  Eindhoven (NL)**
Benannte Vertragsstaaten:
**FR GB**

(72) Erfinder:
• **Meyer, Raimund, Dr.-Ing.**
**Röntgenstrasse 24,**
**22335 Hamburg (DE)**
• **Müller, Stefan, Dipl.-Ing.**
**Röntgenstrasse 24,**
**22335 Hamburg (DE)**

• **Gerstacker, Wolfgang, Dipl.-Ing.**
**Röntgenstrasse 24,**
**22335 Hamburg (DE)**
• **Huber, Johannes, Prof. Dr.-Ing.**
**Röntgenstrasse 24,**
**22335 Hamburg (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
• **JIANJUN WU ET AL: "A NEW ADAPTIVE**
**EQUALIZER WITH CHANNEL ESTIMATOR FOR**
**MOBILE RADIO COMMUNICATIONS" IEEE**
**TRANSACTIONS ON VEHICULAR**
**TECHNOLOGY, Bd. 45, Nr. 3, August 1996, Seiten**
**467-474, XP000632291**
• **MÜLLER S H ET AL.: "Reduced-state soft-output**
**trellis-equalization incorporating soft feedback"**
**IEEE GLOBECOM 1996. COMMUNICATIONS:**
**THE KEY TO GLOBAL PROSPERITY.**
**CONFERENCE RECORD., 18. - 22. November**
**1996, Seiten 95-100, XP002096661 London, UK**

**Beschreibung**

Die Erfindung betrifft ein digitales Übertragungssystem mit einem Empfänger, in dem ein trellisbasiertes Schätzverfahren mit durch Rückkopplung wenigstens eines Rückkopplungswertes reduzierter Zustandszahl mittels einer geschätzten Impulsantwort eines Übertragungssystems Schätzwerte für empfangene Symbole bildet, wobei ein Rückkopplungswert aus wenigstens einem Schätzwert ermittelt wird.

Des weiteren betrifft die Erfindung noch einen Empfänger und ein Verfahren zum Empfang eines digitalen Signals.

Der Gegenstand der Erfindung ist bestimmt für Systeme zur digitalen Übertragung, z.B. digitale Mobilfunksysteme wie das GSM-System oder digitale Richtfunksysteme mit Continuous Phase Modulation (CPM), bei denen trellisbasierte Schätzverfahren, die sowohl zur Entzerrung eines Übertragungskanals als auch zur Decodierung von anderen trelliscodierten Signalen (wie z.B. CPM) eingesetzt werden können, zur Anwendung kommen.

Bei der digitalen Übertragung über dispersive Kanäle wird das Sendesignal verzerrt und durch Rauschen gestört; bei GSM z.B. entstehen die Verzerrungen durch Mehrwegeausbreitung und Eigenimpulsinterferenzen des Modulationsverfahrens. Im Empfänger sind somit spezielle Maßnahmen zur Wiedergewinnung der gesendeten Daten aus dem Empfangssignal notwendig, d.h. ein Entzerrverfahren muß eingesetzt werden. Da bei der digitalen Übertragung zur Erhöhung der Störresistenz oft Kanalcodierung angewendet wird (bei GSM z.B. Faltungscodierung), müssen die vom Entzerrer geschätzten Daten noch decodiert werden. Dazu ist es von Vorteil, wenn der Decoder außer Schätzwerten der codierten Daten noch zusätzlich eine Zuverlässigkeitsinformation (auch Soft-Output-(SO-)Information genannt) vom Entzerrer geliefert bekommt, die angibt, mit welcher Sicherheit die Daten entschieden wurden. Bei trellisbasierten, zustandsreduzierten Entzerrverfahren, die eingesetzt werden können, um auch lange Impulsantworten mit moderater Komplexität zu entzerren, kann die gelieferte Soft-Output-Information deutlich von den tatsächlichen Werten abweichen, was sich degradierend auf die anschließende Decodierung auswirkt.

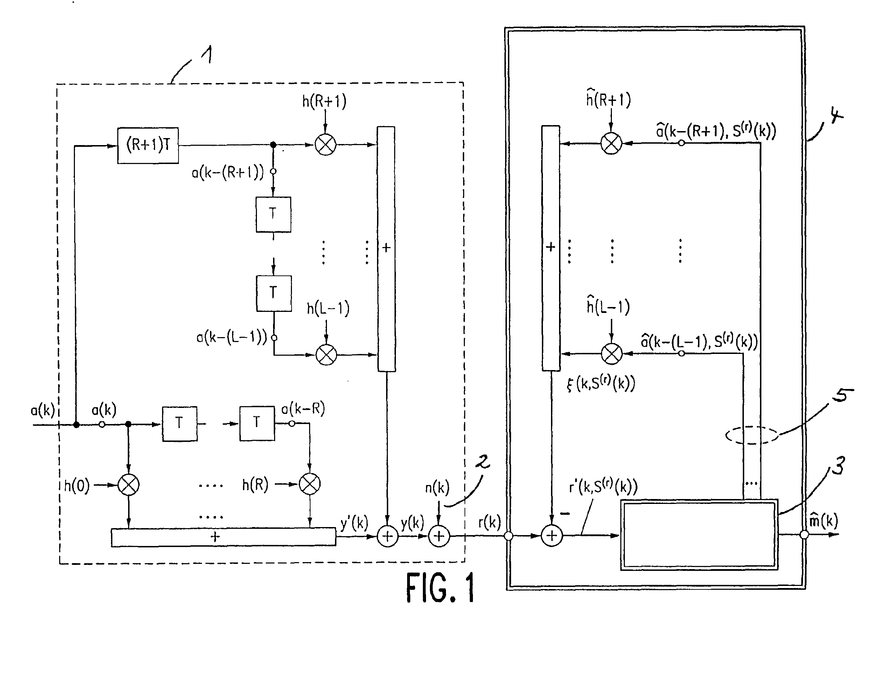

Eine Übertragung mit Pulsamplitudenmodulation (PAM) über einen verzerrenden Kanal, der Intersymbolinterferenzen (ISI) erzeugt, kann zeitdiskret in einem äquivalenten Tiefpaßbereich, wie im linken Teil von Figur 1 dargestellt, modelliert werden. Das abgetastete Empfangssignal r(k) ergibt sich als anschließend durch Rauschen beeinträchtigte Faltung der PAM-Sendesequenz a(k) mit der Kanalimpulsantwort h(k), deren Länge mit L bezeichnet wird:

$$r(k) = \sum_{\kappa=0}^{L-1} h(\kappa) a(k-\kappa) + n(k), \qquad (1)$$

wobei n(k) die zeitdiskrete Störung darstellt, die als weiß angenommen wird, was bei Verwendung eines Whitened-Matched-Filters als zeitkontinuierliches Empfängereingangsfilter vor der Abtastung gegeben ist. Je nach verwendetem Modulationsverfahren sind die Amplitudenkoeffizienten und die Kanalimpulsantwort entweder rein reell oder komplex.

Das optimale Entzerrverfahren mit minimaler Fehlerereigniswahrscheinlichkeit, Maximum-Likelihood-Sequence-Estimation (MLSE), ist aus G. D. Forney, "Maximum likelihood sequence estimation of digital sequences in the presence of intersymbol interference", IEEE Transactions on Information Theory, vol.IT-18, 1972, S. 363-378, bekannt. Insbesondere wurde hier gezeigt, daß MLSE effizient mit Hilfe des Viterbi-Algorithmus (VA) implementiert werden kann. Jedoch ist für lange Impulsantworten h(k) auch der VA kaum mehr realisierbar, da das Trellisdiagramm, das mit dem VA abgearbeitet werden muß, bei M-stufigen Amplitudenkoeffizienten $Z = M^{L-1}$ Zustände pro Zeitschritt besitzt, die Komplexität des VA also exponentiell mit der Länge der zeitdiskreten Impulsantwort wächst. Wenn die Anzahl der von einem gesendeten Symbol beeinträchtigten nachfolgenden Symbole zu groß wird, so müssen aus Gründen der limitiert zur Verfügung stehenden Rechenleistung aufwandsgünstigere, d.h. zustandsreduzierte Entzerrverfahren eingesetzt werden.

Weiterhin ist bekannt, zuerst eine Vorentzerrung bzw. Verkürzung der Kanalimpulsantwort durch einen Entzerrer mit Entscheidungsrückkopplung (Decision-Feedback-Equalization, DFE) durchzuführen. Dabei muß entweder die DFE selbst vorläufige Schwellwertentscheidungen treffen oder es werden ihr vorläufige harte Symbolentscheidungen ($\hat{a}_{HDF}$) des nachfolgenden Viterbi-Entzerrers zugeführt, was in beiden Fällen zu einer merklichen Degradation wegen Fehlerfortpflanzung führt.

Des weiteren kann die Impulsantwort für jeden Zustand des Entzerrers durch eine zustandsabhängige ("private") DFE, anstelle einer zustandsunabhängigen ("common") DFE für alle Zustände, verkürzt werden. Durch den trellisbasierten Algorithmus wird dann nur noch der erste Teil der Impulsantwort mit Länge R+1 mit $1 \leq R+1 \leq L$ entzerrt. Es werden also die Zweigmetriken für Zustandsübergänge im Zeitschritt k von einem (reduzierten) Zustand $S^{(r)}(k) = (\tilde{a}(k-1)\, \tilde{a}(k-2) \ldots \tilde{a}(k-R))$ zum (reduzierten) Zustand $S^{(r)}(k+1) = (\tilde{a}(k)\, \tilde{a}(k-1) \ldots \tilde{a}(k-R+1))$ (die Koeffizienten $\tilde{a}(k-\mu)$ bezeichnen die im speziellen Zustand angenommenen Daten) mit Hilfe von Inhalten von Pfadregistern der einzelnen Zustände berechnet. Die Register beinhalten hart entschiedene Schätzwerte $\hat{a}_{HDF}$ (k - $\mu$, $S^{(r)}$(k)), R + 1 $\leq \mu \leq$ L - 1, über die früheren Datensymbole im zum Zustand $S^{(r)}$(k) führenden Pfad, die zu jedem Zeitschritt aktualisiert werden müssen. Somit ergibt sich die Zweigmetrik zu

$$\lambda_{S^{(r)}(k) \to S^{(r)}(k+1)} = | r(k) - \sum_{\mu=0}^{R} \hat{h}(\mu)\, \bar{a}(k-\mu) - \sum_{\mu=R+1}^{L-1} \hat{h}(\mu)\, \hat{a}_{HDF}(k-\mu,\ S^{(r)}(k)) |^2, \tag{2}$$

wobei $\hat{h}(\mu)$, $0 \leq \mu \leq$ L - 1, die dem Empfänger zur Verfügung stehenden Schätzwerte der Kanalimpulsantwort bezeichnen.

Dieses zustandsreduzierte Schätzverfahren wird im weiteren mit Decision-Feedback-Sequence-Estimation (DFSE) bezeichnet. Die Zustände und Übergänge sind hier nicht mehr eindeutig einer speziellen Symbolkombination im Kanalgedächtnis zugeordnet, sondern es gibt nunmehr, wie generell bei zustandsreduzierten Verfahren, Mehrdeutigkeiten, wobei speziell bei DFSE die ältesten Symbole im Kanalgedächtnis nur noch durch vorläufig entschiedene Symbolwerte berücksichtigt werden.

Die Leistungsfähigkeit von DFSE kann durch ein vorgeschaltetes Allpaßfilter, das die Impulsantwort in ihr minimalphasiges Äquivalent transformiert, nochmals verbessert werden. Durch diese Transformation wird die Energie der Impulsantwort im vorderen Teil konzentriert, wobei das zeitdiskrete Rauschen nach wie vor weiß bleibt. Diese Eigenschaft der minimalphasigen Gesamtimpulsantwort motiviert eine zusätzliche Reduktion der Komplexität der DFSE, indem nur h(R+ 1), h(R+2), ... , h(R'), R < R' < L-1, durch private DFEs ($\hat{a}_{HDF}$ (k - $\mu$, $S^{(r)}$(k))) berücksichtigt werden, der restliche Teil der Impulsantwort h(R'+1), ..., h(L-1) jedoch durch eine einzige common DFE ($\hat{a}_{HDF}$ (k - $\mu$, k)). Wenn der hintere Teil der Impulsantwort nur einen geringen Anteil der Gesamtenergie beinhaltet, wird durch das Weglassen der individuellen Zustandsbezogenheit (der privaten DFEs) die Leistungsfähigkeit der Schätzung kaum vermindert.

Diese Verfahren liefern ausschließlich harte Schätzwerte für die empfangenen Symbole, ohne weitere Information darüber, mit welcher Sicherheit die einzelnen Entscheidungen getroffen wurden, d.h. mit welcher Wahrscheinlichkeit sie richtig sind. Diese Soft-Output-(SO-)Information, hier mit $\hat{m}$(k) bezeichnet (der Vektor $\hat{m}$(k) enthalte Wahrscheinlichkeitsmaße für alle zu übertragenden Symbole a(k)), wird jedoch in vielen Übertragungssystemen wegen einer zusätzlich vorhandenen Kanalcodierung zur Erhöhung der Störresistenz benötigt, da dadurch die Ergebnisse der Decodierung nach der Entzerrung wesentlich verbessert werden können.

Zur Bestimmung der Symbolwahrscheinlichkeiten $\hat{m}$(k) bei blockorientierter Übertragung kann insbesondere ein Algorithmus mit bidirektionaler Rekursionsvorschrift verwendet werden. Dabei werden zuerst durch eine Vorwärtsrekursion die Wahrscheinlichkeiten $\alpha$(k,S(k)) für die Zustände S(k) $\in$ {1,2,...,Z} zum Schritt k bei Berücksichtigung der bisherigen bis zum Zeitpunkt k-1 beobachteten Empfangssignale berechnet. Danach werden Wahrscheinlichkeiten $\beta$(k,S(k)) für die vom Blockende rückwärts bis zum Schritt k beobachteten Empfangssignale bei vorausgesetztem Zustand S(k) im aktuellen Schritt k mittels einer Rückwärtsrekursion bestimmt. Die Zustandswahrscheinlichkeiten $\psi$(k,S(k)) für die Zustände S(k) zum Schritt k bei Beobachtung der gesamten Empfangssequenz ergeben sich dann durch

$$\psi(k,S(k)) = \alpha(k,S(k)) \cdot \beta(k,S(k)). \tag{3}$$

Da ein ISI erzeugender Kanal mit endlich langer Impulsantwort immer als Trelliscoder mit FIR-Struktur interpretiert werden kann, folgen aus den Zustandswahrscheinlichkeiten unmittelbar die A-posteriori-Wahrscheinlichkeiten der Eingangssymbole. Weil der bidirektionale Algorithmus ebenfalls trellisbasiert arbeitet, kann er in gleicher Weise wie der Viterbi-Algorithmus zustandsreduziert werden. Dabei wird bei der Vorwärtsrekursion zur Berechnung der $\alpha$(k,$S^{(r)}$(k)) jedem der $M^R$ reduzierten Zustände ein Pfadregister zur Metrikberechnung zugeordnet, das in jedem Zeitschritt zu aktualisieren ist. Die Zweigmetriken werden gespeichert und bei der Rückwärtsrekursion nochmals verwendet.

Für die Berechnung der Symbolwahrscheinlichkeiten $\hat{m}$(k) bei einer fortlaufenden Übertragung ohne von trellisterminierenden Symbolen gebildeten Blockgrenzen wird nur mit einer Vorwärtsrekursion, also unidirektional, im Gegensatz zum bidirektionalen Algorithmus gearbeitet. Dabei werden in gleicher Weise wie beim bidirektionalen Algorithmus Zustandswahrscheinlichkeiten $\alpha$(k,S(k)) berechnet. Da letztendlich Wahrscheinlichkeiten für die Symbole a(k-D) bei Kenntnis des Empfangssignals bis zum Zeitpunkt k bestimmt werden sollen, ist eine zweite Rekursion notwendig zur Bestimmung von zustandsbezogenen Symbolwahrscheinlichkeiten Pr{a(k-$\delta$)|S(k+1), $\left( r(v) \right)_0^k$}, D $\geq \delta \geq$ L. Mit den Er-

gebnissen beider Rekursionen können die gewünschten A-Posteriori-Wahrscheinlichkeiten $\Pr\{a(k-D)|\ \underline{\hat{r}}(\nu)\ \rbrace_0^k\}$ bestimmt werden. Auch beim unidirektionalen Algorithmus kann eine Zustandsreduktion vorgenommen werden. Durch ampfangsseitige Bildung von überlappenden Blöcken kann der bidirektionale Algorithmus ebenfalls für eine fortlanfende Übertragung verwendet werden. Wegen seiner geringeren Komplexität erscheint er somit generell besser geeignet als der unidirektionale Algorithmus.

Allen bekannten trellisbasierten zustandsreduzierten Entzerrverfahren gemeinsam ist die Tatsache, daß die Qualität der Zuverlässigkeitsinformation $\hat{m}(k)$ für ein empfangenes Symbol bei starker Zustandsreduktion mit hart entschiedenen Rückkopplungswerten unzureichend ist.

Der Artikel "A new Adaptive Equalizer with Channel Estimator for mobile radio communications" von Jianjun Wu und A.Hamid Aghvami, Transaction on vehicular technology, Vol 45, No. 3, August 1996, IEEE beschreibt eine Kanalschätzeimichtung für Mobilfunkkommunikation, bei dem eine Viterbi-Schätzeinrichtung verwendet wird, die mit einem Soft Design Buffer gekoppelt ist, der weiche Rückkopplungswerte ausgibt, wobei die weichen Rückkopplungswerte mit einem Anteil einer Impulsantwort multipliziert werden. Aus den einzelnen weichen Rückkopplungswerten wird ein Gesamt-Rückkopplungswert gebildet, der von dem Eingangssignal subtrahiert wird, bevor das Eingangssignal der Viterbi-Schätzeinrichtung zugeführt wird.

Die Aufgabe der Erfindung ist es, bei reduzierter Zustandszahl durch Rückkopplung möglichst optimale Schätzwerte für die empfangenen Symbole zu erreichen.

Die Aufgabe wird durch die Merkmale der unabhängige Anspruch gelöst.

Die Aufgabe wird beim Gegenstand der Erfindung dadurch gelöst, daß der Empfänger zur Bildung des Rückkopplungswertes aus wenigstens einem Zwischenwert vorgesehen ist. Im Gegensatz zu bekannten Empfängern, bei denen Wertdiskrete Schätzwerte zur Zustandsreduzierung rückgekoppelt werden, können erfindungsgemäß auch Zwischenwerte zur Bildung des Rückkopplungswertes verwendet werden, die andere Wertigkeiten annehmen können. Bei digitalen Übertragungssystemen haben die zu übertragenden Symbole und die Schätzwerte im Empfänger beispielsweise bei binärer Übertragung die Wertigkeiten -1 oder 1. Beim erfindungsgemäßen Empfänger können auch Zwischenwerte mit einer Wertigkeit im Bereich von -1 bis 1 rückgekoppelt werden, wodurch ein besserer Rückkopplungswert und damit bessere Schätzwerte für die empfangenen Symbole erreicht werden.

In einer Weiterbildung der Erfindung ist der Empfänger zur Bildung einer Zuverlässigkeitsinformation für wenigstens einen Schätzwert für ein empfangenes Symbol vorgesehen. Im Empfänger kann ein Schätzverfahren eingesetzt werden, das eine Zuverlässigkeitsinformation (auch Soft-Output-(SO-)Information genannt) liefert, die angibt, mit welcher Sicherheit die Daten entschieden wurden. Bei der digitalen Übertragung wird beispielsweise zur Erhöhung der Störresistenz oft Kanalcodierung angewendet (bei GSM z.B. Faltungscodierung), so daß ein folgender Decoder die geschätzten Daten noch decodieren muß. Dazu ist es von Vorteil, wenn der Decoder außer Schätzwerten der codierten Daten noch zusätzlich die Zuverlässigkeitsinformation geliefert bekommt, aus der in einer bevorzugten Ausführung der Empfänger den Zwischenwert bildet.

Bei einer vorteilhaften Weiterbildung ist der Empfänger zur Bildung der Zuverlässigkeitsinformation für ein empfangenes Symbol mittels optimaler Einzelsymbolschätzverfahren mit uni- oder bidirektionaler Rekursionsvorschrift vorgesehen.

Die Zuverlässigkeitsinformation für ein empfangenes Symbol kann weiterhin durch den Empfänger für ein empfangenes Symbol mittels vereinfachter suboptimaler Schätzverfahren gebildet werden. Während die o.a. uni- und bidirektionalen Algorithmen optimale Verfahren zur Berechnung der Symbolzuverlässigkeit darstellen, existiert außerdem eine Vielzahl von vereinfachten, suboptimalen Verfahren, die aus beiden Algorithmen systematisch abgeleitet werden können oder durch rein heuristische Betrachtungen gefunden wurden. Eine mögliche Vereinfachung besteht beispielsweise in der Verwendung von additiven Pfadmetriken, die mit ACS-Operationen (Add-Compare-Select) aktualisiert werden, statt mit echten Wahrscheinlichkeiten zu rechnen, wozu Multiplikationen nötig sind. Auch kann der reine VA zur Ausgabe von Symbolzuverlässigkeiten modifiziert werden, was zum SOVA (Soft-Output-VA) führt. Suboptimale Verfahren können in der Regel ebenfalls durch Entscheidungsrückkopplung zustandsreduziert werden.

Bei einer weiteren Ausführungsform ist der Empfänger zur Aufteilung des Rückkopplungswertes in einen ersten, zustandsunabhängigen und einen zweiten, zustandsabhängigen Teil vorgesehen. Das Prinzip der erfindungsgemäßen Rückkopplung mit beliebiger Aufteilung in zustandsabhängige ("private") und/oder zustandsunabhängige ("common") DFEs kann auch mit harten Rückkopplungsstrategien kombiniert werden. Dadurch können sich die Rückkopplungterme aus bis zu vier verschiedenen Anteilen zusammensetzen. Als Aufteilungskriterium kann beispielsweise die Energieverteilung der geschätzten Impulsantwort verwendet werden.

Weiterhin wird die Aufgabe noch durch einen Empfänger und ein Verfahren zum Empfang für ein digitales Signal gelöst.

Im folgenden soll ein Ausführungsbeispiel der Erfindung anhand von Zeichnungen näher erläutert werden. Dabei zeigen:

Figur 1: ein Blockschaltbild zur prinzipiellen Vorgehensweise bei der Entzerrung von Intersymbolinterferenzen mit Hilfe von trellisbasierten Entzerrern mit reduzierter Zustandszahl,

Figur 2: Modifiziertes Blockschaltbild zur Verdeutlichung des durch Entscheidungsrückkopplung entstehenden zusätzlichen (zustandsabhängigen) Störterms n und

Figur 3: ein Blockschaltbild bei Aufspaltung der Entscheidungsrückkopplung in Private- und Common-Anteil.

In Figur 1 ist im linken Teil der intersymbolinterferenzerzeugende Kanal 1 mit der Rauschstörung 2 zu erkennen. Die rechte Seite ist die schematische Darstellung eines Entzerrers 4 mit einem zustandsreduzierten trellisbasierten Schätzverfahren 3 mit zustandsabhängiger Entscheidungsrückkopplung 5.

Allen bekannten trellisbasierten zustandsreduzierten Entzerrverfahren 3 gemeinsam ist die Tatsache, daß die Qualität der Zuverlässigkeitsinformation $\hat{m}$(k) (Soft-Output) für ein empfangenes Symbol bei starker Zustandsreduktion mit hart entschiedenen Rückkopplungswerten unzureichend ist. Generell wird für alle von einem Zustand ausgehenden Pfade der Einfluß der Impulsnachläufer bei der Berechnung der zugehörigen Pfadmetriken durch die Rückkopplung der wertdiskreten Symbole aus der Pfadgeschichte berücksichtigt, die dem vorliegenden Symbolalphabet entnommen sind. Es liegen somit immer harte Entscheidungen bezüglich der rückgekoppelten Symbole vor, weshalb diese Vorgehensweise in der Folge als harte Entscheidungsrückkopplung (Hard-Decision-Feedback, HDF) bezeichnet werden soll. Das Prinzip sei durch die Rückführungen von (zustandsabhängigen) harten Symbolwerten $\hat{a}_{HDF}$ (k - μ, S$^{(r)}$ (k)) 5 in Figur 1 verdeutlicht. Das Kanalmodell wurde in dieser Figur bereits ein wenig umgezeichnet, um zu verdeutlichen, daß der Anteil h(0) bis h(R) der Impulsantwort durch den zustandsreduzierten trellisbasierten Algorithmus 3 mit M$^R$ Zuständen berücksichtigt wird und die restlichen Anteile h(R+1) bis h(L-1) der Impulsantwort (die sogenannten Impulsnachläufer) durch eine Entscheidungsrückkopplung 5 berücksichtigt werden, die im allgemeinsten Fall für jeden Hyperzustand S$^{(r)}$ (k) wertmäßig verschieden sein kann. Die zu entzerrende Kanalimpulsantwort h(k) hat aber trotz der Umzeichnung nach wie vor eine Gesamtlänge von L.

Da im allgemeinen für jeden Hyperzustand eine eigene Pfadgeschichte gilt, ist der Gesamtwert der in Figur 1 ersichtlichen harten Rückkopplung

$$\xi_{HDF}(k, S^{(r)}(k)) = \sum_{\mu=R+1}^{L-1} \hat{a}_{HDF}(k-\mu, S^{(r)}(k)) \cdot \hat{h}(\mu) \qquad (4)$$

in der Regel von Hyperzustand zu Hyperzustand verschieden.

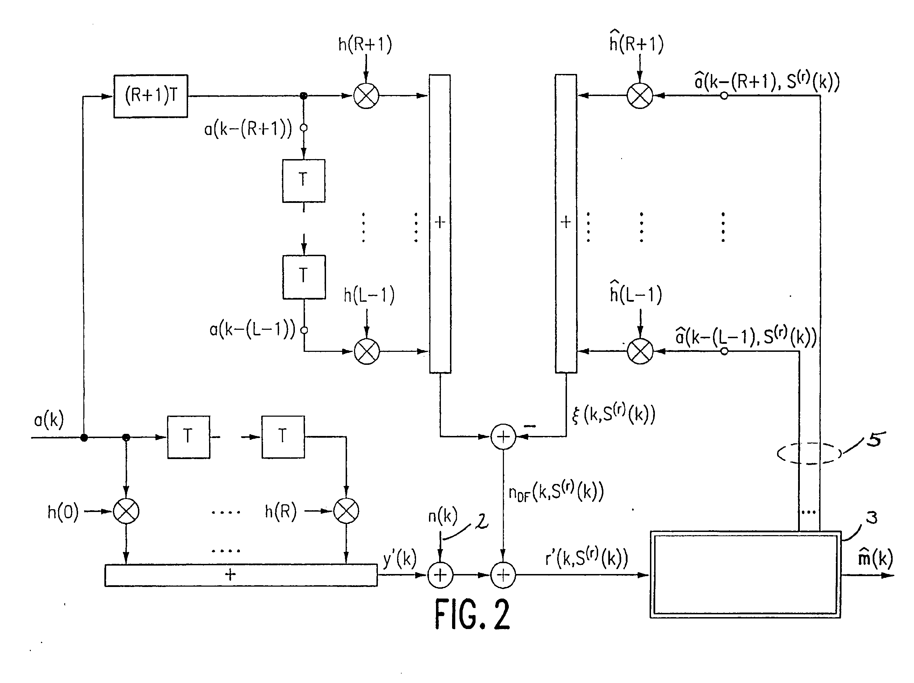

Das Blockschaltbild in Figur 1 kann nun wie in Figur 2 umgezeichnet werden, um einen zusätzlichen Störterm $n_{HDF}$(k, S$^{(r)}$(k)) herauszustellen, welcher durch Rückkopplung falscher Entscheidungen aus dem jeweiligen Pfadregister des Entzerrers entsteht. Der Störterm $n_{HDF}$(k, S$^{(r)}$(k)) ist im allgemeinen von Zustand zu Zustand verschieden, da jeder Hyperzustand S$^{(r)}$(k) im allgemeinen unterschiedliche Werte $\hat{a}_{HDF}$ (k - μ, S$^{(r)}$ (k)) für die Symbole entlang des in diesen Zustand führenden Pfades haben kann. Für den durch die harte Entscheidungsrückkopplung verursachten Fehler im Hyperzustand S$^{(r)}$(k) gilt

$$n_{HDF}(k, S^{(r)}(k)) = \sum_{\mu=R+1}^{L-1} a(k-\mu) \cdot h(\mu) - \sum_{\mu=R+1}^{L-1} \hat{a}_{HDF}(k-\mu, S^{(r)}(k)) \cdot \hat{h}(\mu)$$

$$n_{HDF}(k, S^{(r)}(k)) = \sum_{\mu=R+1}^{L-1} a(k-\mu) \cdot h(\mu) - \xi_{HDF}(k, S^{(r)}(k)) \qquad (5)$$

Solange man annimmt, daß alle Entscheidungen bezüglich der zurückgekoppelten Symbole korrekt sind, so gilt (bei idealer Kanalschätzung) $n_{HDF}$(k, S$^{(r)}$(k))=0 und die bekannten Verfahren mit HDF liefern SO-Werte ($\hat{m}$) hoher Qualität. Allerdings kann man vor allem bei geringen Störabständen auf dem Kanal nicht von der generellen Richtigkeit der zurückgekoppelten Symbolwerte ausgehen, womit durch die Entscheidungsrückkopplung zusätzliche Störleistung in das System eingebracht wird, was die Qualität des SO negativ beeinflußt. Auch zeigt sich bei stark zustandsreduzierten SO-Entzerrverfahren, daß die SO-Güte gegenüber Verfahren mit moderater Zustandsreduktion deutlich nachläßt, d.h. die gelieferten Schätzwerte für die Symbolfehlerwahrscheinlichkeiten und die tatsächlichen Werte sich u.U. signifikant unterscheiden, weil die Fehler in der Metrikberechnung zu groß werden wegen zu häufig fehlerhafter Symbole $\hat{a}_{HDF}$ (k - μ, S$^{(r)}$ (k)). Dies führt zu einer erhöhten Bitfehlerrate nach der Kanaldecodierung.

Die weiteren Ausführungen beschreiben die Verfahren anhand der Anwendung für die Entzerrung. Die prinzipielle Vorgehensweise kann aber auch auf andere trelliscodierte Signale ausgeweitet werden. CPM-Signale lassen sich ebenso wie durch einen Kanal verzerrte Signale als trelliscodierte Signale interpretieren. Bei CPM werden bewußt Impulsinterferenzen in das Signal eingebracht, um das Sendespektrum zu komprimieren. Somit können auf CPM in derselben Weise wie auf über dispersive Kanäle übertragene Signale trellisbasierte Schätzverfahren angewendet werden, so daß der Gegenstand der Erfindung auch bei codierter Übertragung mit CPM eingesetzt werden kann.

Im beschriebenen Ausführungsbeispiel wird ein modifizierter Rückkopplungsterm in der Metrikberechnung verwendet. Eine Möglichkeit ist, den Rückkopplungsterm so zu wählen, daß die mittlere Leistung des Rückkopplungsfehlers minimiert wird. Wie im folgenden hergeleitet wird, sind hierfür jedoch weiche Rückkopplungswerte $\hat{a}_{SDF}$(k - μ, S$^{(r)}$(k)) erforderlich, die durch das jeweilige Verfahren mit hinreichender Genauigkeit berechnet werden. Bei der Minimierung der Fehlerleistung soll die Kenntnis des aktuellen Zustandes S$^{(r)}$(k) und des Empfangssignals bis zum Zeitpunkt k-1 ausgenützt werden. Mathematisch formuliert ist also ein bedingter Erwartungswert zu jedem Zeitpunkt und für jeden Zustand zu minimieren:

$$\varepsilon\left\{\left|n(k, S^{(r)}(k))\right|^2 \mid S^{(r)}(k), \langle r(v) \rangle_0^{k-1}\right\} = \min . \qquad (6)$$

Der Ausdruck für die Fehlerleistung ergibt sich zu

$$\left| n(k, S^{(r)}(k)) \right|^2 = \left| \sum_{\mu=R+1}^{L-1} a(k-\mu) \cdot h(\mu) - \xi(k, S^{(r)}(k)) \right|^2 \qquad . \qquad (7)$$

Dieser Ausdruck für das Betragsquadrat des Fehlers wird in die Erwartungswertbildung nach (6) eingesetzt und der Gesamtausdruck nach der komplexen Rückkopplung abgeleitet. Um das Minimum aufzufinden, wird der Ausdruck zu Null gesetzt.

$$\frac{\partial \varepsilon\left\{\left|n(k, S^{(r)}(k))\right|^2 \mid S^{(r)}(k), \langle r(v) \rangle_0^{k-1}\right\}}{\partial \xi(k, S^{(r)}(k))} \qquad (8)$$

$$= \varepsilon \left\{-\left[\sum_{\mu=R+1}^{L-1} a(k-\mu) \cdot h(\mu) - \xi(k, S^{(r)}(k)]^* \mid S^{(r)}(k), \langle r(v) \rangle_0^{k-1}\right\} = 0$$

Daraus ergibt sich

$$\sum_{\mu=R+1}^{L-1} \varepsilon\left\{ a(k-\mu) \cdot h(\mu) \mid S^{(r)}(k), \langle r(v) \rangle_0^{k-1} \right\} - \xi(k, S^{(r)}(k)) = 0 \qquad (9)$$

und man erhält mit Hilfe der geschätzten (erwarteten) Kanalparameter h(μ) den Wert

$$\xi_{SDF}(k, S^{(r)}(k)) = \sum_{\mu=R+1}^{L-1} \hat{h}(\mu) \cdot \varepsilon\{a(k-\mu) \mid S^{(r)}(k), \langle r(\nu)\rangle_0^{k-1}\} \qquad (10)$$

als den für minimale Fehlerleistung optimalen weichen Rückkopplungswert für alle Zweige, die den Hyperzustand $S^{(r)}$(k) verlassen.

Als eigentliches Resultat ergibt sich der optimale Wert für das jeweilige zurückgekoppelte Einzelsymbol zu

$$\hat{a}_{SDF}(k-\mu, S^{(r)}(k)) = \varepsilon\{a(k-\mu) \mid S^{(r)}(k), \langle r(\nu)\rangle_0^{k-1}\}$$

$$\hat{a}_{SDF}(k-\mu, S^{(r)}(k)) = \sum_{m=0}^{M-1} Pr\{a(k-\mu) = A_m \mid S^{(r)}(k), \langle r(\nu)\rangle_0^{k-1}\} \cdot A_m \qquad (11)$$

wobei $A_m$, $m \in \{0,1,...,M-1\}$, die zugelassenen Amplitudenkoeffizienten aus dem Symbolalphabet A der M-stufigen Übertragung bezeichnen. Die einzelnen Rückkopplungswerte setzen sich also erfindungsgemäß zu gewichteten Anteilen aus den diskreten Werten $A_m$ aus der Menge A der zu übertragenden Symbole zusammen und werden somit wertmäßig nicht mehr ausschließlich aus A gewählt, sondern haben einen analogen Wertebereich. Zur Fehlerleistungsminimierung sind also weiche Rückkopplungswerte zu verwenden (Soft-Decision-Feedback, SDF). Beispielsweise gilt bei binärer Übertragung mit $A_0 = 1$ und $A_1 = -1$

$$-1 \leq \hat{a}_{SDF}(k - \mu, S^{(r)}(k)) \leq 1. \qquad (12)$$

Die für Gleichung (11) benötigten zustandsabhängigen Symbolwahrscheinlichkeiten ($\hat{m}$) sind vom jeweils verwendeten trellisbasierten Entzerrverfahren zu berechnen.

Die in Gleichung (11) angesprochenen bedingten Symbolwahrscheinlichkeiten stehen in einem zustandsreduzierten unidirektionalen Algorithmus ohnehin bereits als Zwischengrößen zur Verfügung, weswegen es hier kaum Mehraufwand bedeutet, weiche Rückkopplungswerte zu verwenden.

Zur Verdeutlichung des Verfahrens zur Gewinnung der weichen Rückkopplungswerte soll an dieser Stelle in groben Zügen eine zustandsreduzierte Version des unidirektionalen Algorithmus als Ausführungsbeispiel wiedergegeben werden. Durch den Algorithmus werden Näherungswerte

$$Pr\{a(k) = A_m \mid \langle r(\nu)\rangle_0^{k-D}\}, \quad m \in \{0, \ldots, M-1\} \qquad (13)$$

für die optimale Zuverlässigkeitsinformation $Pr\{a(k) = A_m \mid \langle r(\nu)\rangle\}$ für die Symbole a(k) errechnet. Die Näherung kommt zum einen durch die Zustandsreduktion selbst zustande und zum zweiten dadurch, daß nur D weiter in der Zukunft liegende Empfangswerte r($\nu$) (also nur bis $\nu$ = k+D) ausgewertet werden. Somit wird nicht die gesamte Sequenz der Empfangswerte zur Bestimmung der Zuverlässigkeitsinformation für einzelne a(k) herangezogen. Man kann jedoch davon ausgehen, daß für hinreichend große D die Näherung schon sehr exakt ist. Der Algorithmus arbeitet somit fortlaufend und gibt nach der Entscheidungsverzögerung D die Zuverlässigkeitsinformation aus, die sich aus der Gleichung

$$Pr\left\{a(k-D)\ \middle|\ \langle r(v)\rangle_0^k\right\} = \frac{p(a(k-D),\langle r(v)\rangle_0^k)}{\sum_{\forall\,\bar{a}(k-D)} p(\bar{a}(k-D),\langle r(v)\rangle_0^k)} \qquad (14)$$

ergibt. Hier wurde die Entscheidungsverzögerung im Argument der im Zeitschritt k ausgegebenen Zuverlässigkeitsinformation zum Signalelement a(k-D) berücksichtigt und die Sequenz der Empfangswerte bis zur Zeit k als bekannt vorausgesetzt.

Die Berechnung der gewünschten Zuverlässigkeitsinformation zur Ausgabe aus dem trellisbasierten Algorithmus setzt die im Zähler und Nenner von (14) ersichtliche Verbundverteilungsdichtefunktion voraus, die mit

$$p(a(k-D),\langle r(v)\rangle_0^k) = \sum_{\forall\,S^{(r)}(k+1)} p(a(k-D),S^{(r)}(k+1),\langle r(v)\rangle_0^k)$$

$$= \sum_{\forall\,S^{(r)}(k+1)} Pr\left\{a(k-D)\mid S^{(r)}(k+1),\langle r(v)\rangle_0^k\right\}\cdot p(S^{(r)}(k+1),\langle r(v)\rangle_0^k)$$

$$= \sum_{\forall\,S^{(r)}(k+1)} Pr\left\{a(k-D)\mid S^{(r)}(k+1),\langle r(v)\rangle_0^k\right\}\cdot \alpha(k+1,S^{(r)}(k+1)) \qquad (15)$$

wiederum errechnet werden kann. Im letzten Schritt wurde die Abkürzung

$$\alpha(k,S^{(r)}(k)) \doteq p(S^{(r)}(k),\langle r(v)\rangle_0^{k-1}) \qquad (16)$$

für die Verbundwahrscheinlichkeit von $S^{(r)}(k)$ und Teilempfangssequenz $\langle r(v)\rangle_0^{k-1}$ benutzt, weshalb diese Größe als Zustandswahrscheinlichkeit bezeichnet werden soll.

Zu beachten ist, daß die zweite Wahrscheinlichkeitsgröße in (15) exakt dem Wert entspricht, der für die Bestimmung der weichen Entscheidungsrückkopplung nötig ist und der als zustandsbedingte Zuverlässigkeitsinformation $Pr\{a(k-\delta)\mid S^{(r)}(k),\langle r(v)\rangle_0^{k-1}\}$ bezeichnet wurde. Es handelt sich hierbei um eine Art vorläufige und zustandsabhängige Symbolwahrscheinlichkeit für das Symbol a(k-δ) unter der Bedingung das Zustands $S^{(r)}(k)$ und daß die Empfangssequenz nur bis r(k-1) beobachtet wurde.

Folglich kann der unidirektionale Algorithmus die gewünschte Zuverlässigkeitsinformation (entspricht der Symbolwahrscheinlichkeit von a(k-D)) aus der Summe von Produkten aus Zustandswahrscheinlichkeit und zustandsbedingter Symbolwahrscheinlichkeit bestimmen, wobei für beide Größen jeweils eine (im zustandsreduzierten Fall näherungsweise) Rekursion angegeben werden kann. Die erste Rekursion für die Zustandswahrscheinlichkeit läßt sich als

$$\alpha(k+1,S^{(r)}(k+1)) \approx \sum_{S^{(r)}(k)\in V(S^{(r)}(k+1))} \alpha(k,S^{(r)}(k))\cdot\gamma(S^{(r)}(k),S^{(r)}(k+1))$$

$$(17)$$

angeben, wobei $V(S^{(r)}(k + 1))$ die Menge aller der Zustände darstellt, die erlaubte Vorgänger zu $S^{(r)}(k+1)$ sind. In dieser

Gleichung stellt $\gamma(S^{(r)}(k), S^{(r)}(k+1))$ die Zweigwahrscheinlichkeit für den Übergang (Zweig) von Zustand $S^{(r)}(k)$ nach $S^{(r)}(k+1)$ dar und läßt sich bei Gauß'schem Rauschen durch die Proportionalität

$$\gamma(S^{(r)}(k), S^{(r)}(k+1)) \sim \exp\left(-\frac{\lambda_{S^{(r)}(k) \to S^{(r)}(k+1)}}{2\sigma^2}\right) \qquad (18)$$

ausdrücken (siehe (2)). Dabei ist $\sigma^2$ die Varianz des Rauschprozesses.

Die zweite Rekursion für die zustandsbedingte Zuverlässigkeitsinformation läßt sich durch Berechnung von

$$Pr\left\{a(k-\delta) \mid S^{(r)}(k+1), \langle r(v) \rangle_0^k\right\} \qquad (19)$$

$$\approx \frac{\displaystyle\sum_{S^{(r)}(k) \in V(S^{(r)}(k+1))} [Pr\{a(k-\delta) \mid S^{(r)}(k), \langle r(v) \rangle_0^{k-1}\}}{\alpha(k+1, S^{(r)}(k+1))} \cdot$$

$$\cdot \frac{\alpha(k, S^{(r)}(k)) \, \gamma(S^{(r)}(k), S^{(r)}(k+1))]}{\alpha(k+1, S^{(r)}(k+1))}$$

durchführen. Diese Berechnung muß für alle $D \geq \delta \geq R+1$ und alle $a(k-\delta) \in A$, sowie für jeden neuen Zustand $S^{(r)}(k+1)$ ausgeführt werden.

Für die im Zeitschritt k neu einzuführenden zustandsbedingten Zuverlässigkeitsinformationen der Symbole, die gerade die Berücksichtigung im Zustand verlieren (also $\delta = R$), gilt die Berechnung mittels

$$Pr\left\{a(k-R) \mid S^{(r)}(k+1), \langle r(v) \rangle_0^k\right\}$$

$$\doteq \frac{\alpha(k, S(a(k-R)) \wedge V(S^{(r)}(k+1))) \cdot \gamma(S(a(k-R)) \wedge V(S^{(r)}(k+1)), S^{(r)}(k+1))}{\alpha(k+1, S^{(r)}(k+1))}$$

$$(20)$$

und diese ist ebenfalls für jeden neuen Hyperzustand und alle $a(k-\delta) \in A$ durchzuführen. Es wurde die Menge

$$S(a(k-R)) \doteq \{S^{(r)}(k) = (\bar{a}(k-1) \ \bar{a}(k-2) \ldots \bar{a}(k-R)) \mid \bar{a}(k-R) = a(k-R)\}$$

$$(21)$$

eingeführt, die alle die Zustände enthält, welche das angegebene Symbol a(k-R) an der entsprechenden zeitlichen Position beinhalten. Somit soll $S(a(k-R)) \wedge V(S^{(r)}(k+1))$ den einen Zustand $S^{(r)}(k)$ darstellen, der Vorgänger zu $S^{(r)}(k+1)$ ist und das Element a(k-R) aufweist. Die Größe $\gamma(S(a(k-R)) \wedge V(S^{(r)}(k+1)), S^{(r)}(k+1))$ ist die Wahrscheinlichkeit für den Zweig der von diesem $S^{(r)}(k)$ zu $S^{(r)}(k+1)$ führt.

Somit sind alle Größen, die zur Bestimmung der Zuverlässigkeitsinformation benötigt werden, rekursiv berechenbar.

Neben dem unidirektionalen Algorithmus kann auch der zustandsreduzierte bidirektionale Algorithmus mit weicher Rückkopplung betrieben werden. Da die Vorwärtsrekursion zur Bestimmung der $\alpha$(k,S(k)) des bidirektionalen Algorithmus zugleich wesentlicher Teil des unidirektionalen Algorithmus ist, ist hierfür nur moderater Mehraufwand notwendig, der darin besteht, die zusätzliche zweite Rekursion des unidirektionalen Algorithmus mit aufzunehmen, die notwendig ist, um die für die weiche Rückkopplung benötigten bedingten Wahrscheinlichkeiten zu bestimmen. Die Länge der hierbei zu aktualisierenden Pfadregister beträgt nur L-1-R, da der unidirektionale Teil dieses kombinierten Algorithmus nur zur Entscheidungsrückkopplung, nicht aber zur Berechnung der Symbolwahrscheinlichkeiten benötigt wird, die durch den bidirektionalen Teil vorgenommen wird. Im Gegensatz dazu ist im reinen unidirektionalen Algorithmus eine deutlich komplexere zweite Vorwärtsrekursion notwendig, da eine Schätzverzögerung von D = 2L bei minimalphasigen Kanälen benötigt wird, um die statistischen Bindungen näherungsweise vollständig zu erfassen.

Die Lösung für $\xi_{SDF}$(k,S$^{(r)}$(k)) nach Gleichung (10) mit minimalem quadratischen Fehler ist nur als eine Möglichkeit aus einer weiten Klasse von denkbaren weichen Rückkopplungsstrategien aufzufassen. Insbesondere bei suboptimalen Verfahren bietet sich die Verwendung ebenfalls suboptimaler weicher Rückkopplungswerte an bzw.ist erforderlich.

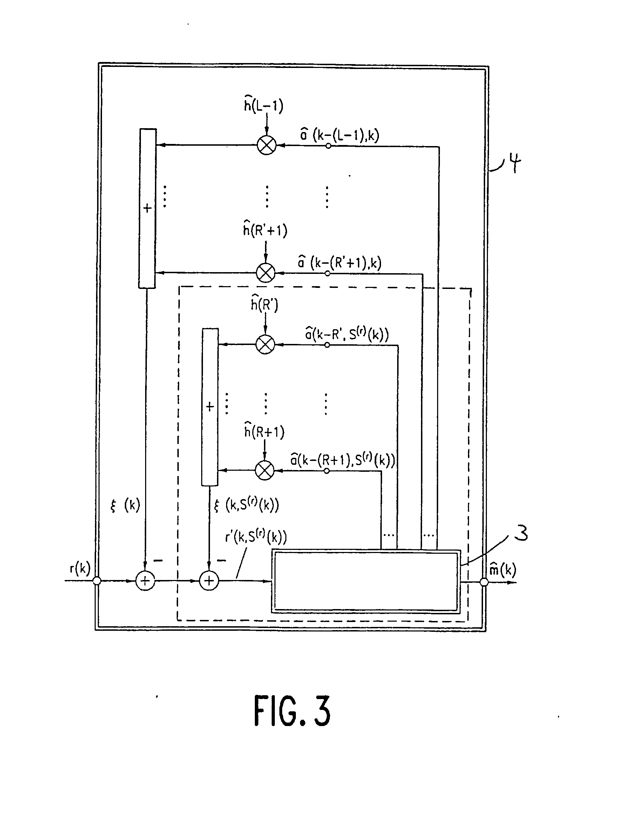

Das bereits geschilderte Prinzip der Aufteilung der Entscheidungsrückkopplung in private DFEs und eine common DFE ist auch bei weichen Werten ohne weiteres möglich, mit den beiden Extremfällen einer ausschließlichen Verwendung der common DFE bzw. der ausschließlichen Verwendung von privaten DFEs. Dabei wird der in Figur 3 ersichtliche Rückkopplungsterm

$$\xi_{SDF}(k, S^{(r)}(k)) = \sum_{\mu=R+1}^{R'} \hat{h}(\mu) \cdot \hat{a}_{SDF}(k-\mu, S^{(r)}(k)), \qquad (22)$$

durch den der vordere Teil der Impulsnachläufer in der Metrikberechnung berücksichtigt wird, individuell für jeden Zustand gebildet, wobei wieder zustandsabhängige weiche Symbolwerte verwendet werden. Der Rückkopplungsterm

$$\xi_{SDF}(k) = \sum_{\mu=R'+1}^{L-1} \hat{h}(\mu) \cdot \hat{a}_{SDF}(k-\mu, k) \qquad (23)$$

dagegen, der den hinteren Teil der Impulsnachläufer berücksichtigt, ist für alle Zustände identisch, braucht also nur einmal mit zustandsunabhängigen weichen Symbolen $\hat{a}_{SDF}$ (k - $\mu$, k) berechnet zu werden. Das Prinzip der weichen Rückkopplung mit seiner beliebigen Aufteilung in private und/oder common DFEs kann auch mit harten Rückkopplungsstrategien kombiniert werden. Allgemein können sich die Rückkopplungsterme dann aus bis zu vier verschiedenen Anteilen zusammensetzen: $\xi_{SDF}$(k, S$^{(r)}$(k)), $\xi_{HDF}$(k, S$^{(r)}$(k)), $\xi_{SDF}$(k) und $\xi_{HDF}$(k), wobei beispielsweise die Energieverteilung der geschätzten Impulsantwort h($\mu$), $0 \leq \mu \leq$ L-1 als Aufteilungskriterium verwendet werden kann.

Bei anschließender Verwertung der durch die Erfindung qualitativ verbesserten SO-Werte des Schätzverfahrens (z.B. zur Entzerrung) in einem nachgeschalteten Decoder, welcher weiche Eingangsinformation verarbeiten kann, erlaubt das erfindungsgemäße Verfahren mit der Rückkopplung weicher Symbolwerte einen deutlichen Gewinn in der Leistungseffizienz der digitalen Übertragung.

Weiterhin wird die durch Verfahren mit Entscheidungsrückkopplung inhärent zusätzlich eingebrachte Störleistung durch den Ansatz des minimalen mittleren Fehlerquadrates um ca. 1 dB vermindert, verglichen mit den entsprechenden Verfahren, die harte Entscheidungsrückkopplung einsetzen.

**Patentansprüche**

**1.** Empfänger für ein digitales Signal, mit einer Schätzeinrichtung (3) zur Bildung von Schätzwerten (â) für empfangene Symbole mit einem zustandsreduzierten trellisbasierten Schätzverfahren unter Verwendung von restlichen Anteil einer geschätzten Impulsantwort bei dem die Zustandszahl des Schätzverfahrens durch eine Entscheidungsrückkopplungseinrichtung (5) wenigstens eines der Schätzwerten (â) für empfangene Symbole erreicht wird und ein Summierer zur Bildung eines Summenrückkopplungswerte (ξ) aus mehreren weichen Rückkopplungswerten mit Zwischenwerten angeordnet wird **dadurch gekennzeichnet, dass** die Entscheidungsrückkopplungseinrichtung

**EP 0 843 444 B1**

(5) Multiplizierer zur Bildung von Rückkopplungswerten aus jeweils dem rückgekoppelten Schätzwert (â) und der geschätzten Impulsantwort ($\hat{h}$) eines Übertragungssystems enthält, wobei sich die dem Summierer zugeführten Rückkopplungswerte aus gewichteten Anteilen von diskreten Werten der zu übertragenden Symbole zusammensetzen und eine Optimierung eines aus dem Summenrückkopplungswert ($\xi$) gebildeten Fehlers ($n_{DF}$) durch Minimierung vorgesehen ist um optimale weiche Rückkopplungswerte zu gestalten und wobei der minimierte Fehler ($n_{DF}$) der Schätzeinrichtung (3) zur Bildung von Zuverlässigkeitsinformationen ($\hat{m}$) für Schätzwerten (â) für empfangene Symbole zuführbar ist.

2. Empfänger nach Anspruch 1, **dadurch gekennzeichnet, dass** der Empfänger zur Bildung des Zwischenwertes aus wenigstens einer Zuverlässigkeitsinformation ($\hat{m}$) vorgesehen ist.

3. Empfänger nach Anspruch 1 oder 2, **dadurch gekennzeichnet,dass** der Empfänger zur Bildung der Zuverlässigkeitsinformation ($\hat{m}$) für ein empfangenes Symbol mittels Einzelsymbolschätzverfahren (3) mit einer uni- oder bidirektionaler Rekursionsvorschrift vorgesehen ist.

4. Empfänger nach einem der Ansprüche 1 - 3, **dadurch gekennzeichnet, dass** der Empfänger ein vereinfachtes Einzelsymbolschätzverfahren (3) mit Verwendung von additiven Pfadmetriken, die mit Add-Compare-Select-Operationen aktualisierbar sind, durchführt.

5. Empfänger nach einem der Ansprüche 1-4, **dadurch gekennzeichnet,dass** die Entscheidungsrückkopplungseinrichtung (5) in einem Entzerrer (4) angeordnet ist, der verschiedene Zustände (S(k)) einnehmen kann, wobei eine erste Rückkopplungseinheit zur zustandsunabhängigen ($\xi$(k)) Rückkopplung von Schätzwerten und eine zweite Rückkopplungseinheit zur zustandsabhängigen ($\xi$ (k, S(k)))Rückkopplung angeordnet ist.

6. Digitales Übertragungssystem mit einem Sender, der ein Sendesignal ausgibt und einem der Empfänger nach den Ansprüchen 1-5.

7. Verfahren zum Empfang eines digitalen Signals mit einem Empfänger, in dem ein zustandsrechziertes, unter Verwendung von restlichen Anteil einer geschätzter Impulsantwort, trellisbasiertes Schätzverfahren (3) zur Bildung von Schätzwerten (â) für empfangenene symbole angewendet wird, wobei die Zustandszahl des Schätzverfahrens durch Rückkopplung wenigstens eines der Schätzwerten (â) erreicht wird und mehrere weiche Rückkopplungswerte mit Zwischenwerten zu einem Summenrückkopplungswert ($\xi$) summiert werden, **dadurch gekennzeichnet, dass** die Rückkopplungswerte aus jeweils dem Schätzwert (â) und der geschätzten Impulsantwort ($\hat{h}$) eines Übertragungssystems gebildet werden und sich die dem Summierer zugeführten Rückkopplungswerte aus gewichteten Anteilen von diskreten Werten der zu übertragenden Symbole zusammensetzen und aus dem Summenrückkopplungswert ($\xi$) ein optimierter Fehlerwert ($n_{DF}$) durch Minimierung gebildet wird um optimale weiche Rückkopplungswerte zu gestalten, und wobei der minimierte Fehler ($n_{DF}$) der Schätzeinrichtung (3) zur Bildung von Zuverlässigkeitsinformationen ($\hat{m}$) für Schätzwerte (â) für empfangene Symbole zugeführt wird.

**Claims**

1. A receiver for a digital signal, with an estimator arrangement (3) for forming estimates (â) for received symbols by means of a state reduced trellis based estimation method using the remaining part of an estimated impulse response, with which method the number of states of the estimation method is reached by means of a decision feedback (5) of at least one of the estimates (â) for received symbols, and a summator is provided which is used for forming a total feedback value ($\xi$) from a plurality of soft feedback values, **characterized in that** the decision feedback (5) comprises multipliers for forming feedback values from the respective coupled estimate (â) and the estimated impulse response ($\hat{h}$) of a transmission system, the feedback values applied to the summator being constituted by weighted parts of discrete values of the symbols to be transmitted and an optimization of an error ($n_{DF}$) formed from the feedback value ($\xi$) is effected by minimization in order to form optimum feedback values and with which the minimized error ($n_{DF}$) can be applied to the estimator (3) so as to form items of soft-output information ($\hat{m}$) for estimates (â) for received symbols.

2. A receiver as claimed in claim 1, **characterized in that** the receiver is arranged for forming the intermediate value from at least one item of soft-output information ($\hat{m}$).

3. A receiver as claimed in claim 1 or 2, **characterized in that** the receiver is arranged for forming the soft-output

information ($\hat{m}$) for a received symbol by means of single-symbol estimation methods (3) with a unidirectional or bidrectional recursion rule.

4. A receiver as claimed in one of the claims 1 to 2, **characterized in that** the receiver performs a simplified single-symbol estimation method (3) utilizing additive path metrics which are updated by means of add-compare-select operations.

5. A receiver as claimed in any one of the claims 1 to 4, **characterized in that** the decision feedback (5) is arranged in an equalizer (4) which can adopt various states (S(k)), a first feedback being provided for state-dependent ($\xi(k)$) feedback of estimates and a second feedback being provided for state-dependent feedback ($\xi(k, S(k))$).

6. A digital transmission system comprising a transmitter which emits a transmission signal and comprising a receiver as claimed in any one of the claims 1 to 5.

7. A method of receiving a digital signal with a receiver in which a state reduced trellis based estimation method using the remaining part of an estimated impulse response is reached by means of a decision feedback of at least one of the estimates (â) and a plurality of soft-decision are summed with intermediate values to get a total feedback value ($\xi$), **characterized in that** the feedback values are formed from the respective estimate (â) and the estimated impulse response ($\hat{h}$) of a transmission system and the feedback values applied to the summator being constituted by weighted parts of discrete values of the symbols to be transmitted and an optimized error value ($n_{DF}$) is formed from the total feedback value ($\xi$) by minimization in order to form optimum feedback values and with which the minimized error ($n_{DF}$) can be applied to the estimator (3) so as to form items of soft-output information ($\hat{m}$) for estimates (â) for received symbols.

**Revendications**

1. Récepteur pour un signal numérique, avec un dispositif d'estimation (3) pour la formation de valeurs estimées (â) pour des symboles reçus avec un procédé d'estimation à base de treillis à nombre d'états réduit, avec utilisation de la part restante d'une réponse impulsionnelle estimée, dans lequel le nombre d'états du procédé d'estimation est atteint par un dispositif à retour de décision (5) d'au moins une des valeurs estimées (â) pour des symboles reçus, et un additionneur est disposé pour la formation d'une valeur de retour cumulée ($\xi$) à partir de plusieurs valeurs de retour douces avec des valeurs intermédiaires, **caractérisé en ce que** le dispositif à retour de décision (5) renferme des multiplicateurs pour la formation de valeurs de retour à partir, à chaque fois, de la valeur estimée réinjectée (â) et de la réponse impulsionnelle estimée ($\hat{h}$) d'un système de transmission, où les valeurs de retour introduites dans l'additionneur se composent de composantes pondérées de valeurs discrètes des symboles à transmettre et où est prévue une optimisation d'une erreur ($n_{DF}$) formée à partir de la valeur de retour cumulée ($\xi$) par minimalisation, pour permettre des valeurs de retour douces optimales, et où l'erreur minimalisée ($n_{DF}$) du dispositif d'estimation (3) peut être introduite pour la formation d'informations relatives à la fiabilité ($\hat{m}$) pour des valeurs estimées (â) pour des symboles reçus.

2. Récepteur selon la revendication 1, **caractérisé en ce que** le récepteur est prévu pour la formation de la valeur intermédiaire à partir d'au moins une information relative à la fiabilité ($\hat{m}$).

3. Récepteur selon la revendication 1 ou 2, **caractérisé en ce que** le récepteur est prévu avec une règle de récurrence uni- ou bidirectionnelle pour la formation de l'information relative à la fiabilité ($\hat{m}$) pour un symbole reçu au moyen de procédés d'estimation de symbole individuel (3).

4. Récepteur selon l'une quelconque des revendications 1 - 3, **caractérisé en ce que** le récepteur exécute un procédé d'estimation de symbole individuel simplifié (3) en utilisant des métriques de chemin additives, qui sont actualisables avec des opérations add-compare-select.

5. Récepteur selon l'une quelconque des revendications 1 - 4, **caractérisé en ce que** le dispositif à retour de décision (5) est disposé dans un égaliseur (4), qui peut prendre plusieurs états (S(k)), où une première unité de rétroaction est disposée pour la rétroaction ($\xi(k)$) indépendante de l'état de valeurs estimées et une seconde unité de rétroaction pour la rétroaction ($\xi(k,S(k))$) dépendante de l'état.

6. Système de transmission numérique avec un émetteur, qui fournit un signal d'émission, et un des récepteurs selon les revendications 1-5.

7. Procédé pour la réception d'un signal numérique avec un récepteur, dans lequel un procédé d'estimation (3) à base de treillis, à nombre d'états réduit, avec utilisation de la part restante d'une réponse impulsionnelle estimée, est employé pour la formation de valeurs estimées (â) pour des symboles reçus, où le nombre d'états du procédé d'estimation est atteint par rétroaction d'au moins une des valeurs estimées (â) et plusieurs valeurs de retour douces sont additionnées avec des valeurs intermédiaires en une valeur de retour cumulée ($\xi$), **caractérisé en ce que** les valeurs de retour sont formées, à chaque fois, à partir de la valeur estimée (â) et de la réponse impulsionnelle estimée (ĥ) d'un système de transmission et les valeurs de retour introduites dans l'additionneur se composent de composantes pondérées de valeurs discrètes des symboles à transmettre et une valeur d'erreur optimisée ($n_{DF}$) est formée à partir de la valeur de retour cumulée ($\xi$) par minimalisation pour former des valeurs de retour douces optimales, et où l'erreur minimalisée ($n_{DF}$) du dispositif d'estimation (3) est introduite pour la formation d'informations relatives à la fiabilité ($\hat{m}$) pour des valeurs estimées (â) pour des symboles reçus.

FIG. 1

14

FIG. 2

FIG. 3